# EUROPEAN PATENT SPECIFICATION

(11) **EP 2 621 718 B1**
(45) Date of publication and mention of the grant of the patent: **23.01.2019**
(21) Application number: 11770245.6
(22) Date of filing: 27.09.2011
(51) Int. Cl.: B32B 3/30, B32B 27/06, B32B 27/32, B32B 27/36, E04B 9/04

(54) **PANELS FOR THE INTERIOR SURFACES OF BUILDINGS**
TAFELN FÜR DIE INNENFLÄCHEN VON GEBÄUDEN
PANNEAUX POUR LES SURFACES INTÉRIEURES D'IMMEUBLES

(30) Priority: 29.09.2010 US 893179
(43) Date of publication of application: 07.08.2013
(73) Proprietor: USG Interiors, LLC, Chicago, IL 60661-3676 (US)
(72) Inventor: YU, Qing, Libertyville, Illinois 60048 (US); PALM, Gregory, Ohio 45431 (US)
(74) Representative: Findlay, Alice Rosemary
(86) International application number: PCT/US2011/053400
(87) International publication number: WO 2012/044599

(56) References cited:
- EP-A1- 0 249 109
- WO-A1-2011/006918
- WO-A2-00/56544
- WO-A2-2006/041666
- US-A- 3 265 547
- US-A- 3 350 257
- US-A- 4 692 372
- US-A1- 2008 000 581

## Description

### BACKGROUND OF THE INVENTION

### FIELD OF THE INVENTION

The present invention relates generally to panels employed as building materials in the construction of the interior surfaces of buildings. In particular, the present invention concerns the employment of such panels as ceiling tiles in ceiling suspension systems.

### DISCUSSION OF THE PRIOR ART

Panels employed in the construction of interior walls and ceilings of buildings, referred to hereinafter as "interior surface panels" are known in the art. Typically, such panels are self-supporting. That is, the panels are capable of supporting their own weights and retaining their shapes without the assistance of reinforcing techniques. Among other properties and qualities, a panel of this type can have desirable sound-absorbing characteristics and good thermal stability, be able to withstand high humidity and be resistant to various forms of fungi. Particularly in those instances in which the panel is employed in a ceiling suspension system, the panel can be thin and lightweight, provide good light reflection and a decorative outer surface that is exposed to the interior of the room where the panel is installed. The panels can be made of various materials and be provided in a variety of standard sizes. Ceiling suspension systems in which the panels or tiles are typically employed normally comprise a system of metal members, referred to in the art as "tee" section elements, which are spaced apart in a grid-like arrangement so as to provide openings in which the panels can be suspended.

Interior surface panels can be constructed of a variety of materials. For example, the panels can comprise a base mat or core made of a gypsum-based material, mineral fibers, fiberglass, cellulose fibers, perlite and composites or laminates thereof with a facing material attached to one or both sides of the base mat. The facing material typically comprises the surface of the panel that is exposed to the environment of the room in which the panel is installed.

Interior surface panels of the foregoing types have a variety of applications. Typically, the properties or characteristics of the panel selected for a particular application depend on the environment in which the panel is to be installed. For example, it is normally the case that, currently, ceiling tiles provided with a facing of a polyvinyl chloride ("PVC") material are employed where tiles having a reasonable cost, water and chemical resistance, and durability are desired. The use of PVC-faced tiles or panels has been promoted for applications in schools, kitchens and healthcare facilities for example. However, environmental concerns have been expressed in connection with the use of PVC materials generally. Consequently, there exists a need for the availability of interior surface panels, such as ceiling tile, that do not possess the environmental issues that are associated with panels that are provided with PVC-containing facings and have properties and characteristics that are at least in several respects superior to the typical PVC-faced panels that are currently available.

US 2008/000581 discloses an interior surface panel configured to be employed as a building component for a wall or ceiling of a room of a building structure, the interior surface panel including:
a base mat having two sides, at least one of the two sides of the base mat being adapted to face the interior of the room; and
a facing material bonded to at least the side of the base mat arranged to face the interior of the room, the facing material comprising a polymer that is free of polyvinyl chlorides.

### BRIEF SUMMARY OF THE INVENTION

The invention provides an interior surface panel configured to be employed as a building component for a wall or ceiling of a room of a building structure, the interior surface panel including a base mat having two sides, at least one of the two sides of the base mat being adapted to face the interior of the room and a facing material comprising a polymer that is free of polyvinyl chlorides bonded to at least the side of the base mat arranged to face the interior of the room, characterized in that the facing material has a non-embossed thickness in the range of two to ten microns with the surface of the facing material that is exposed to the interior of the room having a textured pattern of a pattern depth in the range of two to ten microns, the facing material textured pattern substantially masks the roughness of the surface of the underlying base mat.

An interior surface panel such as a ceiling tile is provided that is free of PVC materials and otherwise possesses desirable properties. In a particular embodiment, the panel possesses properties that make it suitable for installation in environments such as are present in schools, household and commercial kitchens and healthcare facilities.

Examples of polyolefins from which the facing material can be made include polyethylene and polypropylene polymers and copolymers formed into thin sheets or films.

Preferably, the facing material while flexible, demonstrates a resistance to ultraviolet light and a scrubbability that is superior to that of PVC-containing facing materials.

The interior surface panel is aesthetically pleasing and in this connection the PVC-free facing has a preferred thickness, opacity and surface roughness and a texture pattern that is non-directional and discontinuous. In an embodiment of the invention in which the PVC-free facing material is white, the facing material has a preferred light reflectance.

Preferably, the PVC-free facing material is sufficiently rigid to resist significant deformation under tension as reflected by a relatively low value for elongation at yield. In addition, the facing material has very low anisotropy; that is, the facing material exhibits minimal differences in its physical properties in different directions and good dimensional stability.

### BRIEF DESCRIPTION OF THE DRAWINGS

The foregoing and other aspects of the present invention will be apparent to those skilled in the art to which the present invention relates from the detailed descriptions of examples of aspects and embodiments of the invention that follow with reference to the accompanying drawing in which:
FIG. 1 is a microphotograph of a cross-sectional view of an example of an interior surface panel made in accordance with an aspect of the invention wherein the facing material is free of PVC materials; and
FIG. 2 is a microphotograph of a cross-sectional view of an interior surface panel that includes a PVC-containing facing material in accordance with the prior art.

### DESCRIPTIONS OF EXAMPLES OF EMBODIMENTS OF THE INVENTION

Examples of embodiments that incorporate one or more aspects of the present invention are described below with references, in some cases, to the accompanying drawing. These examples are not intended to be limitations on the present invention. Thus, for example, in some instances, one or more examples of the present invention described with reference to one aspect or embodiment can be utilized in other aspects and embodiments. In addition, certain terminology is used herein for convenience only and is not to be taken as limiting the present invention.

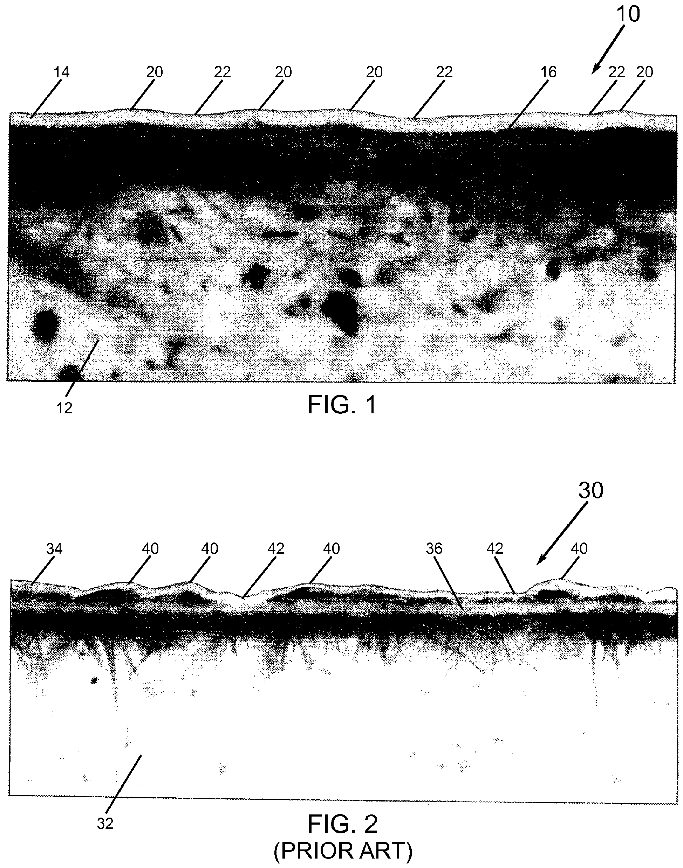

FIG. 1 is a microphotograph of a cross-sectional view of an example of an interior surface panel, indicated generally at 10, made in accordance with an aspect of the invention. The interior surface panel is configured to be employed as a building component for a wall or ceiling, such as a ceiling tile, of a room of a building structure. The panel 10 includes a base mat or core 12 and a facing material 14 that is free of PVC materials and is bonded to the base mat 12 by an adhesive at the interface 16 between the lower surface of the facing material 14 and the upper surface of the base mat 12. The facing material 14 is sometimes referred to as a film or as a scrim.

The base mat 12 can comprise any one of a variety of materials. Thus, when employed as a ceiling tile, the base mat can comprise, for example, a gypsum-based material, a mineral fiber-based material, a fiberglass-based material or a material made of cellulose fibers or perlite or composites or laminates of such materials. As will be familiar to those skilled in the art, the processes for manufacturing the base mat typically result in the surface of the base mat being somewhat rough or uneven.

The facing material employed according to the invention is PVC-free; that is, the facing material is free of polyvinyl chloride related compounds either as intermediates, plasticizers or otherwise. Consequently the facing material 14 does not possess the environmentally questionable properties that are present in PVC-containing materials. According to one aspect of the invention, the facing material 14 comprises a polyolefin copolymer. Examples of polyolefins that can be employed as the facing material include polymers and copolymers of both polyethylene and polypropylene. Typically, the facing material is manufactured as an imperforate sheet or web using conventional processes. It is also contemplated that thermoplastic or thermoset materials such as polyesters that are free of polyvinyl related compounds may be used as the facing material.

In the embodiment of FIG. 1, the PVC-free film 14 is shown as being laminated or bonded to the base mat 12 by an adhesive in a manner known to those skilled in the art. However, the base mat 12 and the film 14 can be bonded to each other by any suitable technique in addition to adhesive bonding such as solvent bonding, ultrasonic bonding and thermal bonding.

As illustrated in FIG. 1, a textured, preferentially non-directional, pattern which includes high spots or peaks 20 and low spots or valleys 22 is imparted to the upper surface of the PVC-free film 14. The textured pattern can be impressed on the polyolefin and polyester sheets or webs by applying an embossing process for example although other methods familiar to those having ordinary skill in the art can be employed. It has been determined that the textured pattern should have a pattern depth or surface roughness in the range of two to ten microns and preferably in the range of four to eight microns. Pattern depths in these ranges, typically, will mask or cover up the roughness of the surface of the underlying base mat while at the same time not possessing so great a texture or roughness as to detract from the aesthetically pleasing appearance of the surface of the film 14. In addition, the texture pattern, preferably, is non-directional and discontinuous; that is, the texture pattern has more or less an intermittent and random configuration and is not oriented in any particular direction nor is the pattern unbroken. In order to accommodate pattern depths in the designated ranges, the thickness of the film 14 is in the range of two to ten microns and preferably in the range of four to six microns.

The characteristics of the facing material 14 discussed in the preceding paragraph are to contrasted with corresponding properties exhibited by an interior surface panel that is provided with a PVC-containing facing material according to the prior art. A panel of the latter type, referred to generally at 30, is shown in FIG. 2. The panel 30 includes a base mat 32, like the base mat 12 of FIG. 1, to which a PVC-containing facing material 34 is bonded using an adhesive 36. The surface of the facing material 34 is provided with a textured pattern that includes peaks 40 and valleys 42 that are significantly more accentuated than the peaks 20 and the valleys 22 of the PVC-free facing material 14 of FIG. 1. In addition, there are associated with the accentuated peaks 40 and valleys 42, numerous upturnings in the facing material 34 which create open spaces between the bottom surface of the facing material and the upper surface of the base mat 32. These open spaces appear in FIG. 2 as dark areas beneath the peaks 40. The presence of the open spaces can be undesirable, particularly with respect to the impact they may have with respect to the scrubbability of the PVC-containing facing material 34 as discussed below. In general, the flatter configuration of the PVC-free film 14 once bonded to the base mat 12 is preferred to the more disruptive configuration of the PVC-containing film 24 after it is bonded to the base mat 32. The differences in the films 14 and 34 in this regard can be seen from a comparison of the PVC-free film 14 of FIG. 1, according to the present invention, and the PVC-containing film 34 of FIG. 2, according to the prior art.

Appropriate dyes and pigments can be added to the polymeric material during the manufacture of the facing material in those cases in which other than a white facing material is desired. In those instances in which a white facing is to be employed, the manufacture of the facing material is accomplished in a manner familiar to those skilled in the art, such as, for example, the addition of talc as a filler and suitable quantities of titanium oxide, so that the facing material 14 after being bonded to the base mat 12 has a whiteness that is consistent with a light reflectance value ("LR" value) of greater than 78 and, preferably, greater than 85; that is, the facing material 14 reflects greater than 78 percent, and preferably greater than 85 percent, of the light that is directed to and impinges on it.

The facing material 14 during its bonding or lamination to the base mat 12 is subject to becoming wrinkled. In order to avoid this undesirable effect, the facing material should be rigid enough to resist significant deformation under tension as reflected by the facing material having a "tensile elongation at yield" value of less than 50% as determined by the TAPPI method that is familiar to those having ordinary skill in the art

The facing material 14 is manufactured so as to be only minimally anisotropic. That is, the physical properties of the facing material are substantially the same in any direction across the material. As a result, the laminating of the facing material 14 to the base mat 12 is facilitated. In addition, should the panel 10 be perforated, for example, for the purpose of enhancing the acoustical qualities of the panel, the facing material, being minimally anisotropic, will resist any tendency of the perforations to elongate.

It also is important for the facing material 14 to possess good dimensional stability in the range of zero to 200 degrees Fahrenheit. That is, the dimensions of the facing material should remain substantially constant over that temperature range. Substantial dimensional changes can result in the formation of wrinkles in the facing material, warping of the base mat and/or delamination of the facing material from the base mat.

The interior surface panels of the invention possess superior resistance to the effects of ultraviolet ("UV") light. In this regard, the UV resistance of the polyolefin film of the invention was evaluated in accordance with QUV Accelerated Weather testing procedures which constitute a laboratory simulation of the damaging force of ultraviolet light. Specifically, the UV resistance of the film was carried out in QUV Accelerated Weathering Tester model QUV/se at a setting of 0.70 W/m²/nm. After 500 hours of exposure to the ultraviolet light in the Tester, the embodiment of the polyolefin film of the invention showed no visual color change. In comparison, a sample of a PVC-containing film tested in the same manner as the polyolefin film showed significant darkening and a change in the surface pattern of the film after only 300 hours of exposure to ultraviolet light. In addition, the LR values of the polyolefin film of the invention underwent significantly less degradation under the ultraviolet light exposure than did the values of the same parameters for the PVC-containing film. As indicated above, the LR value of the film is indicative of the whiteness or brightness of the film. The superior response of the polyolefin film of the invention to ultra violet light was unexpected.

The interior surface panels of the invention also possess superior scrubbability or scrub resistance. The scrub resistance of the polyolefin film of the invention was evaluated in accordance with ASTM test method D 2486 modified so as to note any visual difference in the appearance of the film with the naked eye and so as to determine under an optical microscope the presence of breaking points at the peaks of the texture pattern in the film following the scrubbing of the film. Following this procedure, it was noted that after 5,000 scrubbing cycles the polyolefin film of the invention showed no visual difference with the naked eye except for some loss in gloss and, upon examination under an optical microscope, showed only occasional small breaking points at the peaks of the texture pattern in the film. In comparison, a PVC-containing film tested in the same way as the polyolefin film exhibited to the naked eye breaking at the peaks of the texture pattern in the film after only 1,400 scrubbing cycles. It may be that the presence of the open spaces in the PVC-containing film beneath the peaks 40 of the film 34 influenced the occurrence of the breaking of the peaks of the texture pattern. In other words, it is to be noted, as can be seen from FIG. 1, that the surface roughness of the film 14 is not substantially greater than the thickness of the film whereas, as can be seen from FIG. 2, the converse is true of the film 34. It may be that the greater roughness of the film 34, as reflected by the magnitude of the peaks 40 that are located over the open spaces allow the portions of the film that are located at the peaks 40 to flex or be disturbed by the scrubbing action to the extent that the film tends to break at those locations. Also, the polyolefin copolymer films of the invention exhibit a greater degree of lubricity than do the PVC-containing film of the prior art and that property may contribute to the better reaction of the polyolefin films to the scrubbing tests. In any event, the superiority of the polyolefin film of the invention in regard to its reaction to scrubbing was unexpected.

## Claims

1. An interior surface panel configured to be employed as a building component for a wall or ceiling of a room of a building structure, the interior surface panel including a base mat having two sides, at least one of the two sides of the base mat being adapted to face the interior of the room and a facing material comprising a polymer that is free of polyvinyl chlorides bonded to at least the side of the base mat arranged to face the interior of the room, **characterized in that** the facing material has a non-embossed thickness in the range of two to ten microns with the surface of the facing material that is exposed to the interior of the room having a textured pattern of a pattern depth in the range of two to ten microns, the facing material textured pattern substantially masking the roughness of the surface of the underlying base mat.

2. The interior surface panel of claim 1 wherein the facing material comprises a copolymer.

3. The interior surface panel of claim 2 wherein the facing material comprises a member of the group of polyolefin copolymers and polyester copolymers.

4. The interior surface panel of claim 3 wherein the facing material comprises a polyolefin copolymer selected from the group of polyethylene copolymers and polypropylene copolymers.

5. The interior surface panel of claim 1 wherein the textured pattern is non-directional and discontinuous.

6. The interior surface panel of claim 1 wherein the surface of the facing material that is exposed to the interior of the room has a textured pattern with a roughness in the range of four to eight microns.

7. The interior surface panel of claim 6 wherein the facing material includes dyes and/or pigments in sufficient amounts so that the facing material has a light reflectance value greater than 85

## Patentansprüche

1. Innenflächenpaneel, das dafür konfiguriert ist, als ein Bauelement für eine Wand oder Decke eines Raums einer Gebäudestruktur verwendet zu werden, wobei das Innenflächenpaneel eine Basismatte mit zwei Seiten, wobei mindestens eine der zwei Seiten der Basismatte angepasst ist, dem Rauminneren zugewandt zu sein, und ein Verkleidungsmaterial einschließt, das ein Polymer umfasst, das frei von Polyvinylchloriden ist, die mindestens an die Seite der Basismatte gebunden sind, die so angeordnet ist, dass sie dem Rauminneren zugewandt ist, **dadurch gekennzeichnet, dass** das Verkleidungsmaterial eine ungeprägte Dicke im Bereich von zwei bis zehn Mikrometern aufweist, wobei die Oberfläche des Verkleidungsmaterials, die ins Rauminnere zeigt, ein strukturiertes Muster mit einer Mustertiefe im Bereich von zwei bis zehn Mikrometern aufweist, wobei das strukturierte Muster des Verkleidungsmaterials die Rauheit der Oberfläche der darunterliegenden Basismatte im Wesentlichen maskiert.

2. Innenflächenpaneel nach Anspruch 1, wobei das Verkleidungsmaterial ein Copolymer umfasst.

3. Innenflächenpaneel nach Anspruch 2, wobei das Verkleidungsmaterial ein Element der Gruppe von Polyolefingcopolymeren und Polyestercopolymeren umfasst.

4. Innenflächenpaneel nach Anspruch 3, wobei das Verkleidungsmaterial ein Polyolefincopolymer umfasst, das aus der Gruppe von Polyethylencopolymeren und Polypropylencopolymeren ausgewählt ist.

5. Innenflächenpaneel nach Anspruch 1, wobei das strukturierte Muster richtungsungebunden und diskontinuierlich ist.

6. Innenflächenpaneel nach Anspruch 1, wobei die Oberfläche des Verkleidungsmaterials, die ins Rauminnere zeigt, ein strukturiertes Muster mit einer Rauheit im Bereich von vier bis acht Mikrometern aufweist.

7. Innenflächenpaneel nach Anspruch 6, wobei das Verkleidungsmaterial Farbstoffe und/oder Pigmente in ausreichenden Mengen enthält, so dass das Verkleidungsmaterial einen Lichtreflexionswert von mehr als 85 aufweist.

## Revendications

1. Panneau intérieur de surface configuré pour être utilisé comme élément de construction pour un mur ou un plafond d'une pièce d'une structure de construction, le panneau intérieur de surface incluant un mat de base comportant deux côtés, au moins un des deux côtés du mat de base étant adapté pour faire face à l'intérieur de la pièce et un matériau de revêtement comprenant un polymère exempt de chlorures de polyvinyle collé au moins au côté du mat de base disposé pour faire face à l'intérieur de la pièce, **caractérisé en ce que** le matériau de revêtement a une épaisseur non gaufrée se situant dans la plage allant de deux à dix microns, la surface du matériau de revêtement qui est exposée à l'intérieur de la pièce ayant un motif texturé d'une profondeur de motif dans la plage allant de deux à dix microns, le motif texturé du matériau de revêtement masquant substantiellement la rugosité de la surface du mat de base sous-jacent.

2. Panneau intérieur de surface selon la revendication 1, dans lequel le matériau de revêtement comprend un copolymère.

3. Panneau intérieur de surface selon la revendication 2, dans lequel le matériau de revêtement comprend un élément du groupe de copolymères de polyoléfine et de copolymères de polyester.

4. Panneau intérieur de surface selon la revendication 3, dans lequel le matériau de revêtement comprend un copolymère de polyoléfine sélectionné à partir du groupe de copolymères de polyéthylène et de copolymères de polypropylène.

5. Panneau intérieur de surface selon la revendication 1, dans lequel le motif texturé est non directionnel et discontinu.

6. Panneau intérieur de surface selon la revendication 1, dans lequel la surface du matériau de revêtement qui est exposée à l'intérieur de la pièce a un motif texturé avec une rugosité se situant dans la plage allant de quatre à huit microns.

7. Panneau intérieur de surface selon la revendication 6, dans lequel le matériau de revêtement inclut des colorants et/ou des pigments en quantités suffisantes pour que le matériau de revêtement ait une valeur de réflectance de lumière supérieure à 85.
